# EUROPÄISCHE PATENTSCHRIFT

(11) **EP 3 390 120 B1**
(45) Veröffentlichungstag und Bekanntmachung des Hinweises auf die Patenterteilung: **30.09.2020**
(21) Anmeldenummer: 16822127.3
(22) Anmeldetag: 14.12.2016
(51) Int. Cl.: B60D 1/02, B60D 1/48, B60D 1/155, B60D 1/145

(54) **DEICHSEL MIT ABSCHNITTSWEISE OFFENEM DEICHSELQUERSCHNITT**
TOW BAR HAVIG A PARTIALLY OPEN TOW BAR CROSS-SECTION
TIMON À SECTION TRANSVERSALE OUVERTE DANS CERTAINES ZONES

(30) Priorität: 18.12.2015 DE 102015226098
(43) Veröffentlichungstag der Anmeldung: 24.10.2018
(73) Patentinhaber: JOST-Werke Deutschland GmbH, 63263 Neu-Isenburg (DE)
(72) Erfinder: ALGÜERA, José Manuel, 63739 Aschaffenburg (DE); GITZEN, Stephan, 64560 Riedstadt (DE)
(74) Vertreter: Ruttensperger Lachnit Trossin Gomoll
(86) Internationale Anmeldenummer: PCT/EP2016/080907
(87) Internationale Veröffentlichungsnummer: WO 2017/102799

(56) Entgegenhaltungen:
- DE-U1-202014 105 916
- US-A1- 2014 375 019
- US-A1- 2015 130 163

## Beschreibung

Die vorliegende Erfindung betrifft eine Deichsel für ein Nachlauffahrzeug gemäß dem Oberbegriff des Anspruchs 1

Eine derartige Deichsel ist beispielsweise aus der DE 10 2010 045 085 A1 oder aus der US 2015/0130163 A1 bekannt. Ebenso ist eine Deichsel in der EP 0 434 472 A1 offenbart, allerdings nur in teilweiser Darstellung. Bezüglich weiterer bekannter Deichseln wird auf die DE 10 2014 105 916 U1 und auf die US 2014/0375019 A1 verwiesen.

Die erstgenannte Druckschrift offenbart eine aus zwei Deichsel-Bauteilen gebildete, durch eine Teleskopierbewegung längenveränderliche Nachlauffahrzeug-Deichsel, deren aus den teleskopierbaren Deichselkörper-Bauteilen gebildeter Deichselkörper über seine gesamte Längserstreckung einen bei Betrachtung in einer Schnittebene orthogonal zur Deichsel-Längsrichtung geschlossenen Querschnitt aufweist.

Einen derartigen zur Längsrichtung der Deichsel orthogonalen geschlossenen Querschnitt zeigt auch der Deichselkörper der aus der EP 0 434 472 A1 bekannten Deichsel, der allerdings nicht teleskopierbar oder sonst wie mehrstückig ausgebildet ist.

Es ist Aufgabe der vorliegenden Erfindung, die Funktionalität der gattungsgemäßen Deichseln weiter zu erhöhen, ohne hierdurch jedoch Festigkeitsverluste hinnehmen zu müssen.

Diese Aufgabe wird erfindungsgemäß gelöst durch eine Deichsel mit allen Merkmalen des Anspruchs 1. Gemäß einer vorteilhaften Ausführungsform weist der Deichselkörper einer erfindungsgemäßen Deichsel in einem dem Kupplungs-Längsende näheren Deichselabschnitt einen offenen zur Deichsel-Längsrichtung orthogonalen Querschnitt auf und weist in einem dem Fahrzeug-Längsende näheren Deichselabschnitt einen geschlossenen zur Deichsel-Längsrichtung orthogonalen Querschnitt auf.

Mit "zur Deichsel-Längsrichtung orthogonalem Querschnitt" ist dabei stets ein Querschnitt bezeichnet, der bei Betrachtung des Deichselkörpers in einer zur Deichsel-Längsrichtung orthogonalen Schnittebene erkennbar ist. Der Querschnitt ist geschlossen, wenn dieser Querschnitt in der bezeichneten Schnittebene vollständig umläuft, und der Querschnitt ist offen, wenn der Querschnitt in der betreffenden Schnittansicht nur unvollständig um eine Deichsel-Längsachse umläuft, welche die Deichsel-Längsrichtung definiert.

Dabei sollen geringfügige Öffnungen, wie sie für den Durchgang von Schrauben, Niete und Stiften durch die Deichselwandung hindurch vorgesehen sind, gemäß fachüblichem Verständnis nicht als offener Querschnitt gelten.

Ein Querschnitt kann dann gemäß der vorliegenden Erfindung als offen gelten, wenn eine Deichselwandung zum einen in Umfangsrichtung um eine Deichsellängsachse über wenigstens 10 % des vergleichbaren geschlossenen Umfangs derselben Deichsel fehlt und wenn sich diese Fehlstelle in der Deichselwandung über wenigstens 12 cm in Deichsel-Längsrichtung, also in axialer Richtung, erstreckt. Ein vergleichbarer geschlossener Umfang soll im Zweifel der Umfang des axial dem Deichselabschnitt mit offenem Querschnitt nächstgelegenen geschlossenen Querschnitts sein.

Ein zur Deichsel-Längsrichtung orthogonaler Querschnitt soll gemäß der vorliegenden Anmeldung insbesondere dann als offen gelten, wenn die Deichselwandung im Bereich des geschlossenen Querschnitts durch mehrere zueinander abgewinkelte Flächenbereiche gebildet ist, die in Umfangsrichtung um die Deichsel-Längsachse aufeinander folgen, von welchen im Bereich des offenen Querschnitts ein vollständiger Flächenbereich zwischen zwei Abwinkelorten fehlt.

Durch den abschnittsweise offenen Querschnitt ist ein Innenraum des Deichselkörpers, welcher aus Gründen grundsätzlich erwünschter Masse- und Gewichtsverminderung hohl ausgeführt ist, in einfacher Weise von außen zugänglich und kann so für weitere Aufgaben genutzt werden, beispielsweise als Stauraum für Werkzeug und dgl., das an entsprechenden Befestigungsmitteln im zugänglichen Innenraum des Deichselkörpers angebracht und bis zum Gebrauch verstaut werden kann.

Der Deichselabschnitt mit offenem Querschnitt befindet sich näher am Kupplungs-Längsende als am Fahrzeug-Längsende, da dieses Kupplungs-Längsende für Personen, die am Nachlauffahrzeug arbeiten, leichter zugänglich ist, als ein dem Fahrzeug-Längsende der Deichsel näher gelegener Bereich, da die Deichsel in der Regel in Deichsel-Längsrichtung vom Nachlauffahrzeug weg absteht.

Der geschlossene Querschnitt des Deichselkörpers weist einen Deichselkörper-Boden, eine von diesem in Deichsel-Höhenrichtung mit Abstand angeordnete Deichselkörper-Decke sowie den Deichselkörper-Boden und die Deichselkörper-Decke verbindende Seitenschenkel auf, wobei die Deichselkörper-Seitenschenkel zur Bereitstellung eines Hohlraums zwischen Deichselkörper-Boden, Deichselkörper-Decke und Deichsel-Seitenschenkel in Deichsel-Querrichtung mit Abstand voneinander angeordnet sind. Die Deichsel-Höhenrichtung und die Deichsel-Querrichtung sind orthogonal zueinander sowie jeweils orthogonal zur Deichselkörper-Längsachse. Die Deichsel-Höhenrichtung ist bei parallel zu einem Untergrund des die Deichsel tragenden Nachlauffahrzeugs ausgerichteter Deichsel-Längsachse orthogonal auch zu dem Untergrund orientiert. Die Deichsel-Querrichtung ist in diesem Bezugszustand dann ebenso wie die Deichsel-Längsachse parallel zum Untergrund ausgerichtet. Wenigstens ein Wandabschnitt aus Deichselkörper-Boden, -Decke und -Seitenschenkel kann eben ausgebildet sein, wobei der Übergang zwischen zwei in Umfangsrichtung um die Deichsel-Längsachse aneinander anschließenden Flächenabschnitte, wie beispielsweise Deichselkörper-Boden und Deichselkörper-Seitenschenkel, abgerundet sein kann, um das Verletzungsrisiko bei deichselnahem Arbeiten zu reduzieren. Der Deichselkörper kann im Deichselabschnitt mit geschlossenem Querschnitt aus einem Kreiszylinder oder einem Zylinder mit geschlossenem ovalen Querschnitt gebildet sein oder kann prismatisch sein, vorzugsweise in Form eines Quaders.

Ebenso kann sich der Deichselkörper grundsätzlich längs der Deichsel-Längsachse verjüngen, dann bevorzugt zum Kupplungs-Längsende hin. Ebenso sind Kombinationen von ebenen Wandabschnitten des Deichselkörpers und in Umfangsrichtung an diese anschließende gekrümmten Wandabschnitten denkbar, wobei die gekrümmten Wandabschnitte dann wenigstens in Umfangsrichtung um die Deichsel-Längsachse gekrümmt sind.

Im Falle der oben genannten Deichselkörper-Wandabschnitte: Boden, Decke und Seitenschenkel, sind bevorzugt Boden und Decke zueinander parallel sowie die beiden Seitenschenkel zueinander parallel. Wenigstens der Abstand von Deichselkörper-Boden und Decke kann zum Kupplungs-Längsende hin kleiner werden, während der Abstand der Deichselkörper-Seitenschenkel in dem Abschnitt, in dem der Abstand von Decke und Boden abnimmt, gleich bleiben oder ebenfalls zum Kupplungs-Längsende hin abnehmen kann.

Der offene Querschnitt des Deichselkörpers kann ein U-Profil ebenfalls mit einem Deichselkörper-Boden und mit zu beiden Seiten in Deichsel-Querrichtung an den Deichselkörper-Boden anschließenden und Deichsel-Querrichtung mit Abstand voneinander angeordneten Deichselkörper-Seitenschenkeln aufweisen. In diesem Falle kann beispielsweise die Deichselkörper-Decke im Bereich des Deichselabschnitts mit offenem Querschnitt fehlen, und zwar bevorzugt über die gesamte axiale Länge des Deichselabschnitts mit offenem Querschnitt. Dadurch ist der von dem Deichselkörper gebildete Hohlraum von oben zugänglich und hat einen Boden, auf dem Gegenstände abgelegt werden können, sodass es ausreicht, diese gegen ein Verrutschen längs des Deichselkörper-Bodens zu sichern.

Der Deichselkörper-Boden kann beispielsweise durch orthogonal zur Bodenfläche abstehende Teilungswände in Fächer unterteilt sein, in die hinein Gegenstände abgelegt werden können. Die Fächer können unterschiedliche Größe aufweisen, um zur Aufnahme unterschiedlich großer Gegenstände ausgebildet zu sein. Einzelne oder alle dieser Fächer können durch einen abnehmbaren Deckel abdeckbar sein.

Alternativ kann an dem Deichselabschnitt mit offenem Querschnitt auch einer von zwei Deichselkörper-Seitenschenkeln fehlen, sodass seitlich in den vom Deichselkörper umschlossenen Hohlraum eingegriffen werden kann. Dies ist jedoch weniger bevorzugt, da hier eine unerwünschte Asymmetrie der Deichsel in Deichsel-Querrichtung zu befürchten ist.

Ebenso kann der Deichselabschnitt mit offenem Querschnitt durch Fehlen eines Deichselkörper-Bodens über eine axiale Strecke hinweg gebildet sein. Dies hat den Vorteil, dass Schmutz und Niederschlag nicht ohne Weiteres in den vom Deichselkörper umgebenen Innenraum gelangen können. Jedoch ist die Bildung eines Deichselabschnitts mit offenem Querschnitt durch Ausnahme des Deichselkörper-Bodens aus ergonomischen Gründen weniger bevorzugt. Außerdem ist in diesem Falle der axiale Abschnitt des Deichselkörpers mit offenem Querschnitt nicht zur bloßen Ablage von Gegenständen nutzbar.

Eine noch stärker erleichterte Eingreifbarkeit in den vom Deichselkörper umgebenen Innenraum erhält man in vorteilhafter Weise dadurch, dass die Deichsel-Seitenschenkel im Bereich des offenen Querschnitts des Deichselkörpers kürzer ausgebildet sind als im Bereich des geschlossenen Querschnitts des Deichselkörpers. In diesem Falle können im Deichselabschnitt mit offenem Querschnitt bei zueinander und zur Deichsel-Längsachse parallelen Deichsel-Wandabschnitten verglichen mit dem axial anschließenden Deichselabschnitt mit geschlossenem Querschnitt mehr als 30 %, sogar mehr als 40 %, in manchen Fällen sogar bis zu 50 % des Wandumfangs fehlen, verglichen mit dem Wandumfang des axial nächstgelegenen geschlossenen Abschnitts. Dies bedeutet, dass sich die Deichselwandung im Deichselabschnitt mit offenem Querschnitt nur über etwa 70, sogar nur über etwa 60, in manchen Fällen nur bis zu 50 % des Umfangs erstreckt, längs welchem sich die Deichselwandung im Deichselabschnitt mit geschlossenem Umfang um die Deichselachse herum erstreckt.

Wenngleich nicht ausgeschlossen sein soll, dass der Deichselkörper lediglich aus einem Bauteil gebildet ist, kann zur Steigerung der funktionellen Flexibilität und der Anpassbarkeit der erfindungsgemäßen Deichsel der Deichselkörper wenigstens zweiteilig ausgestaltet sein mit einem ersten Deichselkörper-Bauteil, welches sich von einem dem Fahrzeug-Längsende der Deichsel näher gelegenen Ort in Deichsel-Längsrichtung zum Kupplungs-Längsende hin erstreckt, und mit einem zweiten Deichselkörper-Bauteil, welches an den ersten Deichselkörper-Bauteil in Deichsel-Längsrichtung an diesen zum Kupplungs-Längsende hin anschließend mit dem ersten Deichselkörper-Bauteil verbunden ist. Dabei ist das zweite Deichselkörper-Bauteil bevorzugt lösbar mit dem ersten Deichselkörper-Bauteil verbunden, um das zweite Deichselkörper-Bauteil im Falle einer Reparatur oder Umrüstung der Deichsel gegen ein intaktes bzw. anderes austauschen zu können.

Das zweite Deichselkörper-Bauteil weist dabei den Deichselabschnitt mit dem offenen Querschnitt auf. Das erste Deichselkörper-Bauteil weist vorzugsweise über seine gesamte Länge einen geschlossenen Querschnitt auf. Grundsätzlich kann die erfindungsgemäße Deichsel nur die beiden genannten Deichselkörper-Bauteile aufweisen, sodass sich das erste Deichselkörper-Bauteil ausgehend vom Fahrzeug-Längsende eines Nachlauffahrzeugs in Deichsel-Längsrichtung von diesem weg zum Kupplungs-Längsende hin erstreckt. Das Fahrzeug-Längsende des ersten Deichselkörper-Bauteils ist dann zur Anbringung an das Nachlauffahrzeug ausgebildet und weist entsprechende Anbringungsformationen auf. Es soll jedoch nicht ausgeschlossen sein, dass noch weitere Deichselkörper-Bauteile zur Bildung des Deichselkörpers der erfindungsgemäßen Deichsel beitragen.

Zur möglichst sicheren Verbindung des ersten und des zweiten Deichselkörper-Bauteils miteinander überlappt das zweite Deichselkörper-Bauteil in Deichsel-Längsrichtung das erste Deichselkörper-Bauteil in einem Festlegeabschnitt. In diesem Abschnitt erstrecken sich somit das erste und das zweite Deichselkörper-Bauteil gemeinsam längs der Deichsel-Längsrichtung bzw. Deichsel-Längsachse. In diesem Festlegeabschnitt sind das zweite Deichselkörper-Bauteil und das erste Deichselkörper-Bauteil miteinander verbunden. Um ein unnötig hohes Gewicht der erfindungsgemäßen Deichsel zu vermeiden, erstrecken sich das erste und das zweite Deichselkörper-Bauteil nicht längs der vollständigen axialen Erstreckung eines der beiden Bauteile gemeinsam längs der Deichsel-Längsachse. Vorzugsweise überragt das erste Deichselkörper-Bauteil das zweite Deichselkörper-Bauteil zum Fahrzeug-Längsende hin und überragt das zweite Deichselkörper-Bauteil das erste Deichselkörper-Bauteil axial zum Kupplungs-Längsende hin. Daher ist das erste Deichselkörper-Bauteil bevorzugt wenigstens abschnittsweise, also etwa mit jenem Abschnitt, welcher nicht mit dem zweiten Deichselkörper-Bauteil axial überlappt, zwischen dem Fahrzeug-Längsende und dem zweiten Deichselkörper-Bauteil vorgesehen.

Eine möglichst sichere Festlegung von erstem und zweitem Deichselkörper-Bauteil aneinander im Festlegeabschnitt kann in vorteilhafter Weise dadurch erfolgen, dass das erste und das zweite Deichselkörper-Bauteil durch eine Mehrzahl von beide Deichselkörper-Bauteile in einer Richtung orthogonal zur Deichsel-Längsrichtung durchsetzende Festlegemittel miteinander verbunden sind. Die Festlegemittel, die als lösbare Festlegemittel Schrauben-Muttern-Verbindungen sein können, oder die als unlösbare Festlegemittel Nieten sein können, bilden somit Formschlussverbindungsmittel, die eine Trennung von erstem und zweitem Deichselkörper-Bauteil in axialer Richtung verhindern.

Bevorzugt umgibt das zweite Deichselkörper-Bauteil das erste Deichselkörper-Bauteil im Bereich des Festlegeabschnitts radial außen, d. h. die Wandungen des zweiten Deichselkörper-Bauteils sind im Festlegeabschnitt in derselben die Deichsel-Längsachse enthaltenden Längsschnittansicht radial weiter von der den Deichselkörper in Deichsel-Längsrichtung zentral durchsetzenden virtuellen Deichsel-Längsachse entfernt als das erste Deichselkörper-Bauteil. Bevorzugt sind die Deichselkörper-Bauteile im Festlegeabschnitt derart bemessen, dass das zweite Deichselkörper-Bauteil an seinen nach radial innen weisenden Wandflächen im Festlegeabschnitt das erste Deichselkörper-Bauteil an dessen nach radial außen weisenden Wandflächen berührt, und zwar vorzugsweise so, dass die Innen- und Außenwandflächen der Deichselkörper-Seitenschenkel von zweitem bzw. erstem Deichselkörper-Bauteil aneinander anliegen und dass wenigstens die Innen- und Außenwandflächen der Deichselkörper-Böden oder der Deichselkörper-Decken von zweitem bzw. erstem Deichselkörper-Bauteil aneinander anliegen.

Da das zweite Deichselkörper-Bauteil im Festlegeabschnitt, ebenso wie das erste Deichselkörper-Bauteil, vorzugsweise einen orthogonal zur Deichsel-Längsachse geschlossenen Querschnitt aufweist, berühren sich gemäß einer bevorzugten Ausführungsform die einander in radialer Richtung gegenüberliegenden Innen- und Außenwandflächen der Deichselkörper-Böden, der Deichselkörper-Decken und der Deichselkörper-Seitenschenkel des zweiten bzw. des ersten Deichselkörper-Bauteils.

Selbst wenn die genannten Flächenabschnitte zur Erleichterung der Montage ohne die zuvor genannten die Deichselkörper-Bauteile orthogonal zur Deichsel-Längsrichtung durchsetzenden Festlegemittel mit einem geringfügigen radialen Spaltmaß in axiale Überlappung zueinander gebracht werden können, ist bevorzugt nach Einsatz der durchsetzenden Festlegemittel wenigstens in der Umgebung der Festlegemittel ein Berührkontakt der oben genannten Außenwandflächen des ersten Deichselkörper-Bauteils an Innenwandflächen des zweiten Deichselkörper-Bauteils hergestellt.

Wie oben bereits angedeutet wurde, befindet sich der Abschnitt des zweiten Deichselkörper-Bauteils mit offenem Querschnitt axial außerhalb des Festlegeabschnitts, in welchem sich erstes und zweites Deichselkörper-Bauteil überlappen.

Weiter kann daran gedacht sein, die Deichsel mit für den jeweiligen Einsatzfall passenden Kupplungsgliedern auszurüsten. So kann beispielsweise die Deichsel mit unterschiedlichen Zugösen ausgerüstet werden, je nachdem, auf welchem Erdteil die Deichsel zum Einsatz kommen soll, sodass auf in unterschiedlichen Weltregionen herrschende unterschiedliche Standardisierungen von Kupplungsgliedern Rücksicht genommen werden kann, ohne hierfür den übrigen Deichselkörper verändern zu müssen. Hierzu kann gemäß einer vorteilhaften Weiterbildung der vorliegenden Erfindung vorgesehen sein, dass die Deichsel ein Kupplungsglied-Bauteil umfasst, das einenends das Kupplungsglied, etwa eine Zugöse, zur Herstellung einer Kraft und Bewegung übertragenden Kupplungsverbindung mit einem passenden zugfahrzeugseitigen Kupplungsglied aufweist und andernends eine Befestigungsformation zur Befestigung an einem Deichselkörper-Befestigungsabschnitt des gesondert vom Kupplungsglied-Bauteil ausgebildeten Deichselkörper oder eines Deichselkörper-Bauteils desselben aufweist.

Das Kupplungsglied-Bauteil kann ein Gussbauteil oder ein Schmiedebauteil sein. Bevorzugt ist es ein Schmiedebauteil wegen der mit dem Schmiedevorgang erzielbaren Verfestigung.

Eine einfache und wirkungsvolle Befestigung der Befestigungsformation des Kupplungsglied-Bauteils an dem Deichselkörper kann dadurch erhalten werden, dass sich die Befestigungsformation und der sie tragende Deichselkörper-Befestigungsabschnitt in Deichsel-Längsrichtung überlappen. Im Bereich dieser Überlappung erstrecken sich der Deichselkörper-Befestigungsabschnitt und die Befestigungsformation in axialer Richtung über denselben Längsabschnitt. Zur Vereinfachung der Festlegung der Befestigungsformation am Deichselkörper ist es bevorzugt, wenn der Deichselkörper-Befestigungsabschnitt die Befestigungsformation bezogen auf eine die Deichsel in Deichsel-Längsrichtung zentral durchsetzende Deichsel-Längsachse radial außen umgibt.

Wie bereits zuvor bei der Beschreibung der Festlegung von zweitem und erstem Deichselkörper-Bauteil aneinander ist es auch für die Befestigung der Befestigungsformation am Deichselkörper vorteilhaft, wenn die Befestigungsformation und der sie tragende Deichselkörper-Befestigungsabschnitt durch in einer Richtung orthogonal zur Deichsel-Längsrichtung verlaufende Befestigungsmittel miteinander verbunden sind. Wiederum können dann die Befestigungsmittel die Befestigungsformation formschlüssig am Deichselkörper-Befestigungsabschnitt sichern und beispielsweise im Falle der Verwendung von Schrauben die Befestigungsformation zusätzlich gegen den Deichselkörper-Befestigungsabschnitt klemmen. Hierzu durchsetzen die Befestigungsmittel den Deichselkörper-Befestigungsabschnitt vorzugsweise. Zur Erzielung einer vorteilhaften Austauschbarkeit, etwa im Reparaturfall, des Kupplungsglied-Bauteils sind die Befestigungsformation und der Deichselkörper-Befestigungsabschnitt durch die Befestigungsmittel vorzugsweise lösbar miteinander verbunden. Beispielsweise können die Befestigungsmittel Schrauben umfassen oder eine SchraubenMutter-Kombination.

Bevorzugt ist die Befestigungsformation ausschließlich durch in einer Richtung orthogonal zur Deichsel-Längsrichtung verlaufende Befestigungsmittel mit dem Deichselkörper-Befestigungsabschnitt verbunden. So kann die erfindungsgemäße Deichsel gemäß einer vorteilhaften Weiterbildung zur Befestigung der Befestigungsformation an dem sie tragenden Deichselkörper-Befestigungsabschnitt keine stirnseitig in den Deichselkörper-Befestigungsabschnitt hinein oder/und durch den Deichselkörper-Befestigungsabschnitt hindurch in Deichsel-Längsrichtung verlaufende Befestigungsmittel aufweisen.

Wenngleich die Befestigungsmittel eine Schrauben-Muttern-Kombination umfassen können, kann die Befestigung des Kupplungsglied-Bauteils am Deichselkörper-Befestigungsabschnitt mit Schrauben und Muttern umständlich sein, da insbesondere die näher an der Deichsel-Längsachse gelegenen und auf diese zuweisenden Endbereiche der Schrauben-Muttern-Kombination unter Umständen nur schwer mit einem Schlüssel zum Sichern der Muttern erreichbar sein können. Daher können die die Befestigungsformation mit dem Deichselkörper-Bauteil verbindenden Befestigungsmittel den Deichselkörper-Befestigungsabschnitt durchsetzen und in Sacklöchern der Befestigungsformation verankert sein, insbesondere eingeschraubt sein.

Eine besonders einfache Anordnung der Befestigungsformation während der Montage des Kupplungsglied-Bauteils am Deichselkörper-Befestigungsabschnitt kann dadurch erreicht werden, dass die Befestigungsformation an dem Deichselabschnitt mit offenem Querschnitt mit dem Deichselkörper-Befestigungsabschnitt verbunden ist. In diesem Falle kann die Befestigungsformation dann, wenn der am offenen Querschnitt ausgesparte Wandabschnitt in Umfangsrichtung um die Deichsel-Längsachse ausreichend groß bemessen ist, in einer Richtung orthogonal zur Deichsel-Längsachse in den Deichselkörper-Befestigungsabschnitt eingelegt werden. Bevorzugt schließt die Befestigungsformation an dem vom Deichselkörper-Boden des Deichselkörpers wegweisenden Ende mit den Deichselkörper-Seitenschenkeln bündig ab.

Zur Vermeidung eines unerwünschten Schmutzeintritts in den Innenraum der erfindungsgemäßen Deichsel durch eine am offenen Querschnitt gebildete Öffnung kann vorgesehen sein, dass eine an dem Deichsel-Abschnitt mit offenem Querschnitt durch den offenen Querschnitt gebildete Öffnung von einem Deckel bedeckbar ist, welcher verlagerbar angeordnet ist zwischen einer Inaktivstellung, in welcher wenigstens ein Abschnitt des Deckel in einen von der Deichselwandung gebildeten Hohlraum hinein abgesenkt von einem Wandabschnitt der Deichsel umgeben ist, und einer von der Inaktivstellung verschiedenen Aktivstellung, in welcher der Deckel die Öffnung bedeckt. So kann beispielsweise im Innenraum der erfindungsgemäßen Deichsel angeordnetes Werkzeug oder sonstige Gegenstände gegen eine unbefugte Entnahme gesichert sein. Der Deckel kann in der Aktivstellung durch ein Schließgeheimnis gesichert sein, welches nur durch eine entsprechend autorisierte Person überwunden werden kann.

Um den Deckel zwischen der Aktivstellung und seiner Inaktivstellung wiederholgenau bewegen zu können, ist der Deckel gemäß einer bevorzugten Weiterbildung der vorliegenden Erfindung an einer an der Deichsel vorgesehenen Führungsformation zur Bewegung zwischen der Inaktivstellung und der Aktivstellung geführt, wobei bevorzugt die Bewegung je eine Bewegungskomponente in der Deichsel-Längsrichtung und in einer sowohl zur Deichselquerrichtung wie auch zur Deichsel-Längsrichtung orthogonalen Deichselhöhenrichtung hat. Die genannte bevorzugte Bewegung mit den ebenfalls genannten bevorzugten Bewegungskomponenten stellt sicher, dass der Deckel wenigstens abschnittsweise in einen von dem Deichselabschnitt mit geschlossenem Querschnitt umgebenen Innenraum der Deichsel hinein absenkbar und verschiebbar ist. So kann der Deckel verliersicher am Deichselkörper vorgesehen werden und mittels des Deckels ein Zugang in den Innenraum der Deichsel geschaffen und gegen unerwünschten Zugriff gesichert werden.

Da sich der Deckel über einen größeren Zeitanteil seiner Betriebsdauer in der Aktivstellung befinden wird, ist der Deckel bevorzugt durch eine Belastungsvorrichtung in die Aktivstellung vorbelastet. Die Belastungseinrichtung kann beispielsweise eine Feder, etwa eine Druck- oder/und Zugfeder, umfassen. Der Deckel kann außerdem in einer, vorzugsweise in beiden seiner Stellungen verrastbar oder verriegelbar sein, sodass der Deckel in seiner jeweils erreichten Betriebsstellung: Inaktivstellung oder/und Aktivstellung, gegen eine Verlagerung in die jeweils andere Betriebsstellung sicherbar ist.

Der Deckel kann außerdem an seiner Außenseite eine Funktionsbaugruppe tragen. Insbesondere dann, wenn der Deichselabschnitt mit dem offenen Querschnitt gegenüber dem Deichselabschnitt mit geschlossenem Querschnitt in Deichsel-Höhenrichtung verkürzte Deichselkörper-Seitenschenkel aufweist, kann die Deichsel im Deichselabschnitt mit offenem Querschnitt mit der Funktionsbaugruppe ein Höhenmaß der Deichsel im Deichselabschnitt mit geschlossenem Querschnitt nicht oder nur geringfügig, etwa weniger als 20 %, vorzugsweise weniger als 10 %, bezogen auf das Deichsel-Höhenmaß im Bereich mit geschlossenem Querschnitt, überragen.

Die Deichsel kann gemäß einer vorteilhaften Weiterbildung der vorliegenden Erfindung eine Verstelleinrichtung aufweisen, durch welche der Deckel zwischen der Aktivstellung und der Inaktivstellung verlagerbar ist. Diese Verstelleinrichtung kann ein Kraftgerät umfassen, wie etwa eine pneumatische oder hydraulische Kolben-Zylinder-Anordnung oder einen Elektromotor. Sie kann auch lediglich eine manuelle Verstelleinrichtung sein, die ohne Energieversorgung durch eine äußere apparative Energiequelle die Verlagerung des Deckels zwischen seinen Betriebsstellungen gestattet. Die Muskelkraft einer Bedienperson ist keine apparative Energiequelle. Zum erleichterten Kraftangriff durchsetzt wenigstens ein Abschnitt der Verstelleinrichtung die Deichsel, wobei die Durchsetzungsrichtung insbesondere in Deichsel-Querrichtung verläuft, um ergonomisch vorteilhafte Kraftangriffsstellen für eine Bedienperson bereitzustellen.

Die vorliegende Erfindung wird nachfolgend anhand der beiliegenden Zeichnungen näher erläutert. Es stellt dar:
- Figur 1: eine erfindungsgemäße Ausführungsform des nachlauffahrzeugseitigen Kupplungsbauteils in perspektivischer Explosionsansicht und
- Figur 2: eine Längsschnittansicht durch die Ausführungsform des nachlauffahrzeugseitigen Kupplungsbauteils von Fig. 1 in fertig montiertem Zustand.

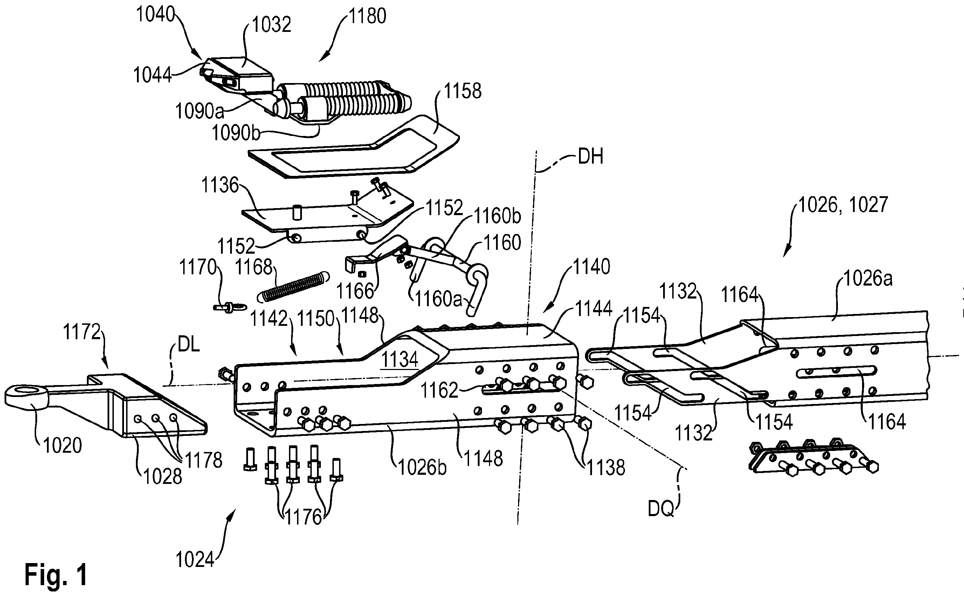

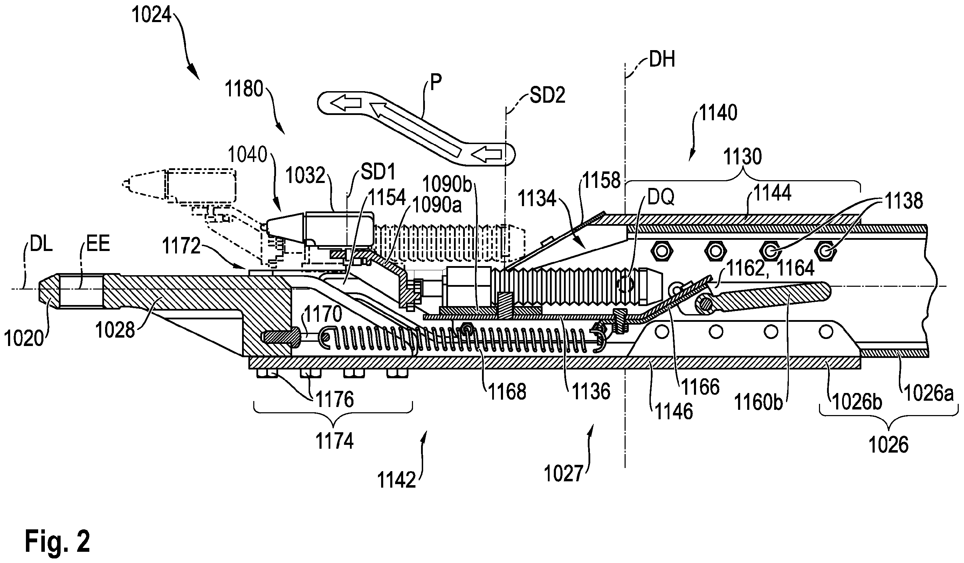

In den Figuren 1 und 2 ist ein erfindungsgemäßes Kupplungsbauteil in Form einer Deichsel 1026 eines Nachlauffahrzeugs dargestellt.

Die Deichsel 1026 weist einen Deichselkörper 1027 mit einem ersten Deichselkörper-Bauteil 1026a auf, welches sich längs einer mit der Deichsel-Längsachse zusammenfallenden Deichselkörper-Längsachse DL von einem einem Nachlauffahrzeugkörper näher gelegenen Fahrzeug-Längsende der Deichsel 1026 weg zu einem durch die Zugöse 1020 markierten axial bezogen auf die Deichselkörper-Längsachse DL entgegengesetzten Kupplungs-Längsende der Deichsel 1026 hin. In axialer Richtung vom Fahrzeug-Längsende weg schließt sich an das erste Deichselkörper-Bauteil 1026a das zweite Deichselkörper-Bauteil 1026b des Deichselkörpers 1027 an, welches mit dem ersten Deichselkörper-Bauteil 1026a in einem FestlegeAbschnitt 1130 (siehe Figur 2) befestigt ist. In diesem Festlegeabschnitt 1130 umgibt das zweite Deichselkörper-Bauteil 1026b das erste Deichselkörper-Bauteil 1026a radial außen, bevorzugt mit sehr geringen Spaltmaßen zwischen den einander gegenüberliegenden Wandabschnitten der Deichselkörper-Bauteile 1026a und 1026b. Besonders bevorzugt liegen wenigstens Teile der einander gegenüberliegenden Wandabschnitte von erstem und zweiten Deichselkörper-Bauteil 1026a bzw. 1026b im fertig montierten Zustand aneinander an.

Das erste Deichselkörper-Bauteil 1026a weist bei Betrachtung in einer zur Deichselkörper-Längsachse DL orthogonalen Schnittebene einen rechteckigen geschlossenen Querschnitt auf. Die Ecken des rechteckigen Querschnitts sind abgerundet ausgebildet.

Längs der Deichselkörper-Längsachse DL und längs der mit der Deichsel-Höhenachse zusammenfallenden Deichselkörper-Höhenachse DH verlaufende Seitenwände des ersten Deichselkörper-Bauteils 1026a sind als Seitenwangen 1132 axial verlängert, um diese als Führungsabschnitte zur Bewegungsführung eines in einen Innenraum 1134 der Deichsel 1026 hinein absenkbaren Deckels 1136 zu nutzen.

Im Festlegeabschnitt 1130 sind das erste und das zweite Deichselkörper-Bauteil 1026a bzw. 1026b ausschließlich durch Befestigungsmittel, hier: Schrauben-Muttern-Kombinationen 1138, mit zur Deichselkörper-Längsachse DL orthogonalem Verlauf miteinander verbunden. Die Befestigungsmittel 1138 durchsetzen sowohl das erste wie auch das zweite Deichselkörper-Bauteil 1026a bzw. 1026b in einer Richtung orthogonal zur Deichselkörper-Längsachse DL.

Das zweite Deichselkörper-Bauteil 1026b weist einen ersten Bauteilabschnitt 1140 auf, welcher bei Betrachtung in einer zur Deichselkörper-Längsachse DL orthogonalen Schnittebene ebenfalls einen geschlossenen Querschnitt aufweist, ebenso wie das erste Deichselkörper-Bauteil 1026a.

Dem Bauteilabschnitt 1140 mit geschlossenem Querschnitt axial benachbart ist ein Bauteilabschnitt 1142 des zweiten Deichselkörper-Bauteils 1026b, in welchem das zweite Deichselkörper-Bauteil 1026b einen offenen Querschnitt aufweist. Der Bauteilabschnitt 1140 mit geschlossenem Querschnitt ist dabei der näher am ersten Deichselkörper-Bauteil 1026a gelegene, der auch zum Festlegeabschnitt 1130 beiträgt, während der Bauteilabschnitt 1142 mit offenem Querschnitt dem Kupplungs-Längsende der Deichsel 1026 näher gelegen ist.

Im Bauteilabschnitt 1140 mit geschlossenem Querschnitt weist das zweite Deichselkörper-Bauteil 1140 ebenfalls einen rechteckigen geschlossenen Querschnitt auf, umfassend eine Deichselkörperdecke 1144, einen von diesem längs der Deichsel-Höhenachse DH mit Abstand angeordneten Deichselkörper-Boden 1146 und zwei längs einer mit der Deichsel-Querrichtung zusammenfallenden Deichsel-Querachse DQ mit Abstand voneinander angeordnete Deichselkörper-Seitenschenkel 1148. Die Deichselkörper-Seitenschenkel 1148 verbinden die Deichselkörper-Decke 1144 mit dem Deichselkörper-Boden 1146.

Im Deichselkörper-Abschnitt 1142 mit offenem Querschnitt weist das zweite Deichselkörper-Bauteil 1026b nur den Deichselkörper-Boden 1148 und zwei parallele davon abstehende Deichselkörper-Seitenschenkel 1148 auf. In dem Deichselkörper-Abschnitt 1142 ist demnach keine Deichselkörper-Decke 1144 vorhanden. Darüber hinaus sind die Deichselkörper-Seitenschenkel 1148 in einem von dem der Zugöse 1020 nächstgelegenen Längsende des zweiten Deichselkörper-Bauteils 1026b ausgehenden Bereich des Deichselkörper-Abschnitts 1142 mit offenem Querschnitt längs der Deichselkörper-Höhenachse DH kürzer ausgebildet als im Deichselkörper-Abschnitt 1140 mit geschlossenem Querschnitt. Somit ist in dem Deichselkörper-Abschnitt 1142 mit offenem Querschnitt eine von außen zugängliche Öffnung 1150 gebildet, durch welche hindurch der Innenbereich 1134 der Deichsel 1026 zugänglich ist.

Durch diese Öffnung 1150 können beispielsweise Gegenstände, wie etwa Bordwerkzeug und dgl., in den Innenraum 1134 der Deichsel 1026 abgelegt und in geeigneter Weise befestigt werden. Somit ist die Deichsel 1026 beispielsweise als Stauraum nutzbar.

Im vorliegenden Ausführungsbeispiel ist die Öffnung 1150 durch den zuvor bereits erwähnten Deckel 1136 verschließbar und wahlweise zum Eingriff freigebbar. Der Deckel 1136 ist in seiner Gestalt der Öffnung 1150 nachgebildet, die er verschließen soll. An seinen Seiten weist der Deckel 1136 Vorsprünge 1152 auf, welche in Kulissenführungen 1154 in den Seitenwangen 1132 ausgebildet sind, die als Axial-Verlängerungen der Deichselkörper-Seitenschenkel des ersten Deichselkörper-Bauteils 1026a gebildet sind. Der Deckel 1136 ist somit längs der Deichselkörper-Höhenachse DH sowie längs der Deichselkörper-Längsachse DL in den Innenbereich 1134 der Deichsel 1026 absenkbar und einziehbar. In Figur 2 ist der Deckel 1136 mit durchgezogenem Strich in seiner in den Deichselinnenraum 1134 eingezogenen Inaktivstellung gezeigt und ist mit strichpunktierter Linie in seiner Aktivstellung gezeigt, in welcher er die Öffnung 1150 verschließt. Der Deckel 1136 ist längs der Pfeilfolge P in Figur 2 von der Inaktivstellung in die Aktivstellung verlagerbar.

Zur Abdichtung der Öffnung 1150 in der Aktivstellung des Deckels 1136 ist an der Öffnung 1150 eine Dichtung 1158 vorgesehen, an deren zum Deichselinnenbereich 1134 hinweisender Seite der Deckel 1136 in der Aktivstellung anliegt. Die Dichtung 1158 kann beispielsweise aus einer Gummimatte oder allgemein einer Elastomermatte ausgeschnitten sein.

Zur Verstellung des Deckels 1136 zwischen der Aktivstellung und der Inaktivstellung kann dieser mit einem Handbetätigungsglied 1160 gekoppelt sein, welches im dargestellten Beispiel die Deichsel 1026 längs der Deichselkörper-Querachse DQ durchsetzt. Hierzu weisen die Deichselkörper-Seitenschenkel 1148 im Bauteilabschnitt 1140 mit geschlossenem Querschnitt in axiale Richtung bezogen auf die Deichselkörper-Längsachse DL verlaufende Langlöcher 1162 auf, welche im fertig montierten Zustand von in etwa gleichformatigen Langlöchern 1164 in den Seitenschenkeln des ersten Deichselkörper-Bauteils 1026a überlagert sind.

Das Handbetätigungsglied weist beiderseits der Deichsel 1026 je einen Handeingriffsabschnitt 1160a auf, welche von außerhalb der Deichsel 1026 durch eine Bedienperson leicht ergriffen werden können.

Das Handbetätigungsglied 1160 ist außerdem über eine Verbindungsstange 1160b gelenkig mit einem Verbindungselement 1166 verbunden, welches einerseits, wie in Figur 2 erkennbar ist, mit dem Deckel 1136 verbunden ist, und welches andererseits als Federwiderlager für eine Vorspann-Schraubendruckfeder 1168 dient, die den Deckel 1136 in die Aktivstellung vorspannt. In den Figuren 10 und 11 nicht dargestellte Festlegemittel können vorgesehen sein, um den Deckel 1136 gegen die Vorspannkraft der Feder 1168 in der Inaktivstellung vorübergehend festzulegen.

Wie weiter in Figur 2 zu erkennen ist, ist das entgegengesetzte Federwiderlager der Schraubendruckfeder 1168 am Zugösen-Bauteil 1028 festgelegt, beispielsweise durch eine in dieses eingedrehte Ringschraube 1170.

Das Zugösen-Bauteil 1028 ist in seiner Gestalt und in seiner Befestigung am Deichselkörper 1027, genauer am zweiten Deichselkörper-Bauteil 1026b, ebenfalls bemerkenswert:
Das Zuösen-Bauteil 1028 weist einerseits an einem Längsende die Zugöse 1020 auf und weist an seinem anderen Längsende eine Befestigungsformation 1172 auf.

Das Zugösen-Bauteil 1028, insbesondere seine Befestigungsformation 1172, ist im fertig montierten Zustand von nur drei Seiten von der Deichsel 1026, genauer vom zweiten Deichselkörper-Bauteil 1026b, noch genauer von dem Deichselkörper-Abschnitt 1142 mit offenem Querschnitt, bezogen auf die Deichselkörper-Längsachse DL radial außen umgeben. Dies bedeutet, die Befestigungsformation 1172 des Zugösen-Bauteils 1028 liegt auf dem Deichselkörper-Boden 1148 der Deichsel 1026, genauer des zweiten Deichselkörper-Bauteils 1026b, auf und ist längs der Deichselkörper-Querachse DQ zu beiden Seiten von den Deichselkörper-Seitenschenkeln 1148 eingefasst, die in dem betreffenden Überlappungsabschnitt mit der Befestigungsformation 1172 des Zugösen-Bauteils 1028 in Deichselkörper-Höhenrichtung verglichen mit dem Abschnitt 1140 mit geschlossenem Querschnitt verkürzt ausgebildet sind.

Insbesondere ist das Zugösen-Bauteil 1028 axial in einer Auszugsrichtung aus dem Deichselkörper 1027, also zu einem vor der Deichsel 1026 befindlichen Zugfahrzeug hin, nicht formschlüssig durch einen Deichselkörper-Abschnitt umgriffen oder sonst wie hintergriffen.

Wie bereits die beiden Deichselkörper-Bauteile 1026b und 1026a ist auch das Zugösen-Bauteil 1028 in dem mit ihm überlappenden Deichselkörper-Befestigungsabschnitt 1174 des zweiten Deichselkörper-Bauteils 1026b ausschließlich mit Befestigungsmitteln am zweiten Deichselkörper-Bauteil 1026b befestigt, welche das zweite Deichselkörper-Bauteil 1026b in einer Richtung orthogonal zur Deichselkörper-Längsachse DL durchsetzen und die Befestigungsformation 1172 des Zugösen-Bauteils 1028 entweder ebenfalls orthogonal zur Deichselkörper-Längsachse DL durchsetzen oder in dieser Richtung in die Befestigungsformation einragen. Im dargestellten Beispiel sind die Befestigungsmittel 1176 in Form von Schrauben in Sacklöcher 1178 in der Befestigungsformation 1172 des Zugösen-Bauteils 1028 eingedreht. Die Sacklöcher 1178 sind hierzu mit einem Innengewinde versehen. Die Befestigungsformation 1172 ist im dargestellten Beispiel U-förmig ausgebildet, wobei die beiden Seitenschenkel der Befestigungsformation 1172 längs der Deichselkörper-Längsachse DL von der die Seitenschenkel verbindenden Basis der Befestigungsformation 1172 abstehen. mit der Basis ist die Zugöse 1020 vorzugsweise einstückig materialschlüssig verbunden.

Die Durchgangslöcher für Schrauben sowie die Durchgangslanglöcher 1162 und 1164 in den jeweiligen Deichselkörper-Bauteilen 1026a und 1026b sind geringfügige Durchsetzungen dieser Bauteile und sollen nichts an der Beurteilung des sie tragenden Abschnitts als einem Abschnitt mit geschlossenem Querschnitt ändern.

Der Deckel 1136 kann nicht nur die Öffnung 1150 verschließen, sondern kann außerdem eine Funktionsbaugruppe tragen, wie etwa eine Baugruppe 1180 zur automatisierten Herstellung einer Energie oder/und Information übertragenden Verbindung mit einem an die Deichsel 1026 angekuppelten Zugfahrzeug.

Die Funktionsbaugruppe 1180 kann hierzu ein Steckerbauteil 1032 als eine Schnittstelle einer Energie oder/und Information führenden Versorgungsleitung sowie ein Ausrichtbauteil 1040 mit einer Ausrichtformation 1044 zur steckerverbindungsvorbereitenden Ausrichtung der Funktionsbaugruppe 1180 aufweisen. Das Steckerbauteil 1032 kann an einem ersten Supportbauteilabschnitt 1090a um eine zur Deichselkörper-Höhenachse DH parallele Drehachse drehbar aufgenommen sein. Weiter kann der erste Supportbauteilabschnitt 1090a an einem zweiten Supportbauteilabschnitt 1090b längs einer zur Deichselkörper-Höhenachse DH orthogonalen Trajektorie translatorisch verlagerbar sein. Schließlich kann der zweite Supportbauteilabschnitt 1090b relativ zum Deckel 1136 um eine weitere zur Deichselkörper-Höhenachse DH parallele Drehachse drehbar aufgenommen sein.

In Figur 2 ist die Funktionsbaugruppe 1180 mit durchgezogener Linie in ihrer Nicht-Gebrauchsstellung, also mit dem Deckel 1136 in der Inaktivstellung, dargestellt. In vorteilhafter Weise ist die Funktionsbaugruppe 1180, die in der Aktivstellung des Deckels 1136 nahe an das zugfahrzeugseitige Kupplungsbauteil herangeführt ist, mit dem die Zugöse 1020 kuppelbar ist, in der Inaktivstellung des Deckels 1136 innerhalb der Einhüllenden des zweiten Deichselkörper-Bauteils 1026b aufgenommen, welche man erhält, wenn man dessen Abschnitt 1140 mit geschlossenem Querschnitt über die ganze axiale Länge des zweiten Deichselkörper-Bauteils 1026b fortgesetzt denkt. Durch die so erhaltene geringe Auskragabmessung der Funktionsbaugruppe 1180 in ihrer Nicht-Gebrauchsstellung ist deren Beschädigungsrisiko bei Nichtgebrauch erheblich reduziert. Teile der Funktionsbaugruppe 1180 sind in deren Nicht-Gebrauchsstellung sogar im Inneren 1134 der Deichsel 1026 aufgenommen und ist allseits von einer Deichselwandung des Abschnitts 1140 mit geschlossenem Querschnitt umgeben.

## Patentansprüche

1. Deichsel (1026) für ein Nachlauffahrzeug, mit einem Kupplungs-Längsende und einem dem Kupplungs-Längsende längs einer eine Deichsel-Längsrichtung definierenden Deichsel-Längsachse (DL) axial entgegengesetztem Fahrzeug-Längsende, wobei die Deichsel (1026) an ihrem Kupplungs-Längsende ein Kupplungsglied (1020) aufweist, das zur Herstellung einer Kupplungsverbindung mit einem zugfahrzeugseitigen Kupplungsbauteil ausgebildet ist, und wobei die Deichsel (1026) an ihrem Fahrzeug-Längsende zur Verbindung mit einem Fahrzeugkörper eines Nachlauffahrzeugs ausgebildet ist, wobei sich zwischen den Längsenden der Deichsel (1026) ein Deichselkörper (1027) erstreckt, wobei der Deichselkörper (1027) in einem dem Kupplungs-Längsende näheren Deichselabschnitt (1142) einen offenen zur Deichsel-Längsrichtung orthogonalen Querschnitt aufweist und in einem dem Fahrzeug-Längsende näheren Deichselabschnitt (1140) einen geschlossenen zur Deichsel-Längsrichtung orthogonalen Querschnitt aufweist,
**dadurch gekennzeichnet, dass** der Deichselkörper lediglich aus einem Bauteil gebildet ist, oder dass der Deichselkörper (1027) wenigstens zweiteilig ausgestaltet ist, mit einem ersten Deichselkörper-Bauteil (1026a), welches sich von einem dem Fahrzeug-Längsende der Deichsel (1026) näher gelegenen Ort in Deichsel-Längsrichtung (DL) zum Kupplungs-Längsende hin erstreckt, und mit einem zweiten Deichselkörper-Bauteil (1026b), welches an den ersten Deichselkörper-Bauteil (1026a) in Deichsel-Längsrichtung an diesen zum Kupplungs-Längsende hin anschließend mit diesem verbunden ist, wobei das zweite Deichselkörper-Bauteil (1026b) in Deichsel-Längsrichtung das erste Deichselkörper-Bauteil (1026a) in einem Festlegeabschnitt (1130) überlappt, in welchem das zweite Deichselkörper-Bauteil (1026b) mit dem ersten Deichselkörper-Bauteil (1026a) verbunden ist, wobei das zweite Deichselkörper-Bauteil (1026b) den Deichselabschnitt (1142) mit dem offenen Querschnitt aufweist, und wobei das erste Deichselkörper-Bauteil (1026a) und das zweite Deichselkörper-Bauteil (1026b) im Festlegeabschnitt (1130) einen orthogonal zur Deichsel-Längsachse (DL) geschlossenen Querschnitt aufweisen.

2. Deichsel nach Anspruch 1,
**dadurch gekennzeichnet, dass** der geschlossene Querschnitt des Deichselkörpers (1027) einen Deichselkörper-Boden (1146), eine von diesem in Deichsel-Höhenrichtung (DH) mit Abstand angeordnete Deichselkörper-Decke (1144) sowie den Deichselkörper-Boden (1146) und die Deichselkörper-Decke (1144) verbindende Deichselkörper-Seitenschenkel (1148) aufweist, wobei die Deichselkörper-Seitenschenkel (1148) in Deichsel-Querrichtung (DQ) mit Abstand voneinander angeordnet sind, sowie dadurch, dass der offene Querschnitt des Deichselkörpers (1027) ein U-Profil mit einem Deichselkörper-Boden (1146) und mit zu beiden Seiten in Deichsel-Querrichtung (DQ) an den Deichselkörper-Boden (1146) anschließenden, in Deichsel-Querrichtung (DQ) mit Abstand voneinander angeordneten Deichselkörper-Seitenschenkeln (1148) aufweist.

3. Deichsel nach Anspruch 2,
**dadurch gekennzeichnet, dass** die Deichsel-Seitenschenkel (1148) im Bereich (1142) des offenen Querschnitts des Deichselkörpers (1027) kürzer ausgebildet sind als im Bereich (1140) des geschlossenen Querschnitts des Deichselkörpers (1027).

4. Deichsel nach einem der vorhergehenden Ansprüche,
**dadurch gekennzeichnet, dass** zweite Deichselkörper-Bauteil (1026b)mit dem ersten Deichselkörper-Bauteil (1026a) lösbar verbunden ist.

5. Deichsel nach einem der vorhergehenden Ansprüche,
**dadurch gekennzeichnet, dass** das erste (1026a) und das zweite Deichselkörper-Bauteil (1026b) durch eine Mehrzahl von beide Deichselkörper-Bauteile (1026a, 1026b) in einer Richtung orthogonal zur Deichsel-Längsrichtung durchsetzende Festlegemittel (1138) miteinander verbunden sind.

6. Deichsel nach einem der vorhergehenden Ansprüche,
**dadurch gekennzeichnet, dass** sie ein Kupplungsglied-Bauteil (1028) umfasst, das einenends das Kupplungsglied (1020), etwa eine Zugöse (1020), und andernends eine Befestigungsformation (1172) aufweist, zur Befestigung an einem Deichselkörper-Befestigungsabschnitt (1174) des gesondert vom Kupplungsglied-Bauteil (1028) ausgebildeten Deichselkörper (1027) oder eines Deichselkörper-Bauteils (1026b) desselben.

7. Deichsel nach Anspruch 6,
**dadurch gekennzeichnet, dass** sich die Befestigungsformation (1172) und der sie tragende Deichselkörper-Befestigungsabschnitt (1174) in Deichsel-Längsrichtung überlappen, wobei bevorzugt der Deichselkörper-Befestigungsabschnitt (1174) die Befestigungsformation (1172) bezogen auf eine die Deichsel (1026) in Deichsel-Längsrichtung durchsetzende Deichsel-Längsachse (DL) radial außen umgibt.

8. Deichsel nach Anspruch 7,
**dadurch gekennzeichnet, dass** die Befestigungsformation (1172) und der sie tragende Deichselkörper-Befestigungsabschnitt (1174) durch in einer Richtung orthogonal zur Deichsel-Längsrichtung verlaufende, und den Deichselkörper-Befestigungsabschnitt (1174) vorzugsweise durchsetzende, Befestigungsmittel (1176) miteinander verbunden sind, vorzugsweise lösbar verbunden sind.

9. Deichsel nach einem der Ansprüche 6 bis 8,
**dadurch gekennzeichnet, dass** sie zur Befestigung der Befestigungsformation (1172) an dem sie tragenden Deichselkörper-Befestigungsabschnitt (1174) keine stirnseitig in den Deichselkörper-Befestigungsabschnitt (1174) hinein oder/und durch den Deichselkörper-Befestigungsabschnitt (1174) hindurch in Deichsel-Längsrichtung verlaufende Befestigungsmittel aufweist.

10. Deichsel nach Anspruch 8 oder 9,
**dadurch gekennzeichnet, dass** die die Befestigungsformation (1172) mit dem Deichselkörper (1027), insbesondere mit dem zweiten Deichselkörper-Bauteil (1026b) verbindenden Befestigungsmittel (1176) den Deichselkörper-Befestigungsabschnitt (1174) durchsetzen und in Sacklöchern (1178) der Befestigungsformation (1172) verankert sind, insbesondere eingeschraubt sind.

11. Deichsel nach einem der vorhergehenden Ansprüche,
**dadurch gekennzeichnet, dass** die Befestigungsformation (1172) an dem Deichselabschnitt (1142) mit offenem Querschnitt mit dem Deichselkörper-Befestigungsabschnitt (1174) verbunden ist.

12. Deichsel nach einem der vorhergehenden Ansprüche,
**dadurch gekennzeichnet, dass** eine an dem Deichsel-Abschnitt (1142) mit offenem Querschnitt durch den offenen Querschnitt gebildete Öffnung (1150) von einem Deckel (1136) bedeckbar ist, welcher verlagerbar angeordnet ist zwischen einer Inaktivstellung, in welcher wenigstens ein Abschnitt des Deckels (1136) in einen von der Deichselwandung gebildeten Hohlraum (1134) hinein abgesenkt von einem Wandabschnitt der Deichsel (1026) umgeben ist, und einer von der Inaktivstellung verschiedenen Aktivstellung, in welcher der Deckel (1136) die Öffnung (1150) bedeckt.

13. Deichsel nach Anspruch 12,
**dadurch gekennzeichnet, dass** der Deckel (1136) an einer an der Deichsel (1026) vorgesehenen Führungsformation (1154) zur Bewegung zwischen der Inaktivstellung und der Aktivstellung geführt ist, wobei bevorzugt die Bewegung je eine Bewegungskomponente in der Deichsel-Längsrichtung und in einer sowohl zur Deichsel-Querrichtung (DQ) wie auch zur Deichsel-Längsrichtung orthogonalen Deichsel-Höhenrichtung (DH) hat.

14. Deichsel nach Anspruch 12 oder 13,
**dadurch gekennzeichnet, dass** der Deckel (1136) durch eine Belastungseinrichtung (1168), welche vorzugsweise wenigstens eine Feder (1168) umfasst, in die Aktivstellung vorbelastet ist.

15. Deichsel nach einem der Ansprüche 12 bis 14,
**dadurch gekennzeichnet, dass** der Deckel (1136) eine Funktionsbaugruppe (1180), wie etwa ein Steckerbauteil (1032) zur Herstellung einer Energie oder Signale übertragenden Leitungsverbindung oder/und ein Ausrichtbauteil (1040) zur räumlichen Ausrichtung der Funktionsbaugruppe (1180), trägt.

## Claims

1. A drawbar (1026) for a towed vehicle, having a hitch longitudinal end and a vehicle longitudinal end located axially oppositely from the hitch longitudinal end along a longitudinal drawbar axis (DL) defining a longitudinal drawbar direction; the drawbar (1026) comprising at its hitch longitudinal end a hitching member (1020) that is embodied for establishment of a hitched connection to a towing-vehicle-side hitch component; and the drawbar (1026) being embodied at its vehicle longitudinal end for connection to a vehicle body of a towed vehicle; a drawbar body (1027) extending between the longitudinal ends of the drawbar (1026); the drawbar body (1027) having, in a drawbar portion (1142) closer to the hitch longitudinal end, an open cross section orthogonal to the longitudinal drawbar direction; and having, in a drawbar portion (1140) closer to the vehicle longitudinal end, a closed cross section orthogonal to the longitudinal drawbar direction,
**characterized in that** the drawbar body is constituted only from one component; or the drawbar body (1027) is configured in at least two parts, having a first drawbar-body component (1026a) that extends from a point located closer to the vehicle longitudinal end of the drawbar (1026), in a longitudinal drawbar direction (DL), toward the hitch longitudinal end, and having a second drawbar-body component (1026b) that is connected to the first drawbar-body component (1026a) adjacently thereto in a longitudinal drawbar direction toward the hitch longitudinal end; the second drawbar-body component (1026b) overlapping the first drawbar-body component (1026a), in a longitudinal drawbar direction, in a securing portion (1130) in which the second drawbar-body component (1026b) is connected to the first drawbar-body component (1026a); the second drawbar-body component (1026b) comprising the drawbar portion (1142) having the open cross section; and the first drawbar-body component (1026a) and the second drawbar-body component (1026b) having, in the securing portion (1130), a closed cross section orthogonal to the longitudinal drawbar axis (DL).

2. The drawbar according to Claim 1,
**characterized in that** the closed cross section of the drawbar body (1027) has a drawbar-body bottom (1146), a drawbar-body top (1144) arranged at a distance therefrom in a vertical drawbar direction (DH), and drawbar-body lateral limbs (1148) connecting the drawbar-body bottom (1146) and the drawbar-body top (1144), the drawbar-body lateral limbs (1148) being arranged with a spacing from one another in a transverse drawbar direction (DQ); and the open cross section of the drawbar body (1027) has a U-shaped profile, having a drawbar-body bottom (1146) and having drawbar-body lateral limbs (1148) adjoining the drawbar-body bottom (1146) on both sides in a transverse drawbar direction (DQ) and arranged with a spacing from one another in a transverse drawbar direction (DQ).

3. The drawbar according to Claim 2,
**characterized in that** the drawbar lateral limbs (1148) are embodied to be shorter in the region (1142) of the open cross section of the drawbar body (1027) than in the region of the closed cross section of the drawbar body (1027).

4. The drawbar according to one of the preceding claims,
**characterized in that** the second drawbar-body component (1026b) is connected detachably to the first drawbar-body component (1026a).

5. The drawbar according to one of the preceding claims,
**characterized in that** the first (1026a) and the second drawbar-body component (1026b) are connected to one another by a plurality of securing means (1138) that pass through both drawbar-body components (1026a, 1026b) in a direction orthogonal to the longitudinal drawbar direction.

6. The drawbar according to the present invention,
**characterized in that** it encompasses a hitching-member component (1028) that comprises at one end the hitching member (1020), for example a tow eye (1020), and at the other end a fastening configuration (1172) for fastening on a drawbar-body fastening portion (1174) of the drawbar body (1027) embodied separately from the hitching-member component (1027) or of a drawbar-body component (1026b) thereof.

7. The drawbar according to Claim 6,
**characterized in that** the fastening configuration (1172) and the drawbar-body fastening portion (1174) that carries it overlap in a longitudinal drawbar direction, the drawbar-body fastening portion (1174) preferably surrounding the fastening configuration (1172) radially externally with respect to a longitudinal drawbar axis (DL) passing centrally through the drawbar (1026) in a longitudinal drawbar direction.

8. The drawbar according to Claim 7,
**characterized in that** the fastening configuration (1172) and the drawbar-body fastening portion (1174) that carries it are connected, preferably detachably connected, to one another by fastening means (1176) proceeding in a direction orthogonal to the longitudinal drawbar direction and preferably passing through the drawbar-body fastening portion (1174).

9. The drawbar according to one of Claims 6 to 8,
**characterized in that** it comprises, for fastening the fastening configuration (1172) on the drawbar-body fastening portion (1174) that carries it, no fastening means that proceed at the end face into the drawbar-body fastening portion (1174) and/or through the drawbar-body fastening portion (1174) in a longitudinal drawbar direction.

10. The drawbar according to Claim 8 or 9,
**characterized in that** the fastening means (1176) that connect the fastening configuration (1172) to the drawbar body (1027), in particular to the second drawbar-body component (1026b), pass through the drawbar-body fastening portion (1174) and are anchored in, in particular threaded into, blind holes (1178) of the fastening configuration (1172).

11. The drawbar according to one of the preceding claims,
**characterized in that** the fastening configuration (1172) on the drawbar portion (1142) having an open cross section is connected to the drawbar-body fastening portion (1174).

12. The drawbar according to one of the preceding claims,
**characterized in that** an opening (1150) formed by the open cross section on the drawbar portion (1142) having an open cross section is coverable by a cover (1136) that is arranged displaceably between an inactive position in which at least a portion of the cover (1136) is recessed into a cavity (1134) constituted by the drawbar wall and is surrounded by a wall portion of the drawbar (1026), and an active position, different from the inactive position, in which the cover (1136) covers the opening (1150).

13. The drawbar according to Claim 12,
**characterized in that** the cover (1136) is guided, on a guidance configuration (1154) provided on the drawbar (1026), for movement between the inactive position and the active position, the movement preferably having a movement component respectively in the longitudinal drawbar direction and in a vertical drawbar direction (DH) orthogonally both to the transverse drawbar direction (DQ) and to the longitudinal drawbar direction.

14. The drawbar according to Claim 12 or 13,
**characterized in that** the cover (1136) is preloaded into the active position by a loading apparatus (1168) that preferably encompasses at least one spring (1168).

15. The drawbar according to one of Claims 12 to 14,
**characterized in that** the cover (1136) carries a functional subassembly (1180), for example an insertion-connector component (1032) for establishing an energy- or signal-transferring lead connection and/or an alignment component (1040) for physical alignment of the functional subassembly (1180).

## Revendications

1. Barre de traction (1026) pour un véhicule tracté, avec une extrémité longitudinale d'accouplement et une extrémité longitudinale de véhicule axialement opposée à l'extrémité longitudinale d'accouplement le long d'un axe longitudinal de barre de traction (DL) définissant une direction longitudinale de barre de traction, dans lequel la barre de traction (1026) comprend à son extrémité d'accouplement longitudinale un élément d'accouplement (1020) qui est adapté pour établir une connexion d'accouplement avec un composant d'accouplement du côté du véhicule tracteur, et dans lequel la barre de traction (1026) est adaptée à son extrémité longitudinale pour être relié à un corps de véhicule d'un véhicule tracté, dans lequel un corps de barre de traction (1027) s'étend entre les extrémités longitudinales de la barre de traction (1026), dans lequel le corps de barre de traction (1027) comprend une section transversale ouverte orthogonale à la direction longitudinale de barre de traction dans une section de barre de traction (1142) plus proche de l'extrémité longitudinale d'accouplement et comprend une section transversale fermée orthogonale à la direction longitudinale de barre de traction dans une section de barre de traction (1140) plus proche de l'extrémité longitudinale de véhicule,
**caractérisé en ce que** le corps de barre de traction est formé d'un seul composant, ou **en ce que** le corps de barre de traction (1027) est réalisé au moins en deux parties, avec un premier composant de corps de barre de traction (1026a) qui s'étend dans la direction longitudinale de barre de traction (DL) d'un endroit plus proche de l'extrémité longitudinale de véhicule de la barre de traction (1026) vers l'extrémité longitudinale d'accouplement, et avec un deuxième composant de corps de barre de traction (1026b) qui est relié au premier composant de corps de barre de traction (1026a) dans la direction longitudinale de barre de traction et se raccorde à celle-ci vers l'extrémité longitudinale d'accouplement, dans lequel le deuxième composant de corps de barre de traction (1026b) chevauche le premier composant de corps de barre de traction (1026a) dans la direction longitudinale de barre de traction dans une section de fixation (1130) dans lequel le deuxième composant de corps de barre de traction (1026b) est relié au premier composant de corps de barre de traction (1026a), dans lequel le deuxième composant de corps de barre de traction (1026b) présente la section de barre de traction (1142) avec la section transversale ouverte, et dans lequel le premier composant de corps de barre de traction (1026a) et le deuxième composant de corps de barre de traction (1026b) dans la section de fixation (1130) présentent une section transversale fermée orthogonalement à l'axe longitudinal de barre de traction (DL).

2. Barre de traction selon la revendication 1,
**caractérisé en ce que** la section transversale fermée du corps de barre de traction (1027) comprend un fond de corps de barre de traction (1146), un recouvrement de corps de barre de traction (1144) espacé de celle-ci dans la direction de hauteur de barre de traction (DH) et des branches latérales de corps de barre de traction (1148) reliant le fond de corps de barre de traction (1146) et le recouvrement de corps de barre de traction (1144), dans lequel les branches latérales (1148) du corps de barre de traction sont espacées les unes des autres dans la direction transversale de barre de traction (DQ), et **en ce que** la section transversale ouverte du corps de barre de traction (1027) présente un profil en U avec un fond de corps de barre de traction (1146) avec des branches latérales (1148) du corps de barre de traction se raccordant au fond (1146) du corps de barre de traction des deux côtés dans la direction transversale de barre de traction (DQ) et espacées les unes des autres dans la direction transversale de barre de traction (DQ).

3. Barre de traction selon la revendication 2,
**caractérisé en ce que** les branches latérales de barre de traction (1148) sont adaptées pour être plus courtes dans la région (1142) de la section transversale ouverte du corps de barre de traction (1027) que dans la région (1140) de la section transversale fermée du corps de barre de traction (1027).

4. Barre de traction selon l'une des revendications précédentes,
**caractérisé en ce que** le deuxième composant de corps de barre de traction (1026b) est relié de manière amovible au premier composant de corps de barre de traction (1026a).

5. Barre de traction selon l'une des revendications précédentes,
**caractérisée en ce que** le premier (1026a) et le deuxième composant de corps de barre de traction (1026b) sont reliés entre eux par une pluralité de moyens de fixation (1138) pénétrant les deux éléments de corps de barre de traction (1026a, 1026b) dans une direction orthogonale à la direction longitudinale de barre de traction.

6. Barre de traction d'accouplement selon l'une des revendications précédentes,
**caractérisé en ce qu'**il comprend un composant d'élément d'accouplement (1028) comprenant à une extrémité l'élément d'accouplement (1020), tel qu'un œillet de remorquage (1020), et à l'autre extrémité une formation de fixation (1172) pour la fixation à une partie de fixation de corps de barre de traction (1174) du corps de barre de traction (1027) formée séparément du composant d'élément d'accouplement (1028) ou d'un composant de corps de barre de traction (1026b) de celui-ci.

7. Barre de traction selon la revendication 6,
**caractérisé en ce que** la formation de fixation (1172) et la partie de fixation de corps de barre de traction (1174) qui la porte se chevauchent dans la direction longitudinale de barre de traction, dans lequel de préférence la partie de fixation du corps de barre de traction (1174) entoure la formation de fixation (1172) radialement vers l'extérieur par rapport à un axe longitudinal de barre de traction (DL) passant par la barre de traction (1026) dans la direction longitudinale de barre de traction.

8. Barre de traction selon la revendication 7,
**caractérisé en ce que** la formation de fixation (1172) et la section de fixation du corps de barre de traction (1174) qui la porte sont reliées, de préférence de manière amovible, l'une à l'autre par des moyens de fixation (1176) qui s'étendent dans une direction orthogonale à la direction longitudinale de barre de traction et traversent de préférence la section de fixation du corps de barre de traction (1174).

9. Barre de traction selon l'une des revendications 6 à 8,
**caractérisé en ce que**, pour la fixation de la formation de fixation (1172) sur la section de fixation de corps de barre de traction (1174) qui la porte, elle ne présente aucun moyen de fixation s'étendant sur la face frontale dans la section de fixation de corps de barre de traction (1174) et/ou à travers la section de fixation de corps de barre de traction (1174) dans la direction longitudinale de barre de traction.

10. Barre de traction selon la revendication 8 ou 9,
**caractérisé en ce que** les moyens de fixation (1176) reliant la formation de fixation (1172) au corps de barre de traction (1027), en particulier au deuxième composant de corps de barre de traction (1026b), traversent la section de fixation de corps de barre de traction (1174) et sont ancrés, en particulier vissés, dans des trous borgnes (1178) de la formation de fixation (1172).

11. Barre de traction selon l'une des revendications précédentes,
**caractérisée en ce que** la formation de fixation (1172) à la section de barre de traction (1142) avec une section transversale ouverte est reliée à la section de fixation de corps de barre de traction (1174).

12. Barre de traction selon l'une des revendications précédentes,
**caractérisée en ce qu'**une ouverture (1150) formée dans la section de barre de traction à section transversale ouverte (1142) à travers la section ouverte peut être recouverte par un recouvrement (1136) qui est disposé de manière à pouvoir être déplacé entre une position inactive, dans lequel au moins une partie du recouvrement (1136) est entourée, abaissée dans une cavité (1134) formée par la paroi de la barre de traction, par une section de paroi de la barre de traction (1026), et une position active différente de la position inactive, dans lequel le recouvrement (1136) couvre l'ouverture (1150).

13. Barre de traction selon la revendication 12,
**caractérisé en ce que** le recouvrement (1136) est guidé sur une formation de guidage (1154) prévue sur la barre de traction (1026) pour le mouvement entre la position inactive et la position active, le mouvement ayant de préférence une composante de mouvement respective dans la direction longitudinale de barre de traction et dans une direction de hauteur de barre de traction (DH) orthogonale à la fois à la direction transversale de barre de traction (DQ) et à la direction longitudinale de barre de traction.

14. Barre de traction selon la revendication 12 ou 13,
**caractérisé en ce que** le recouvrement (1136) est préchargé en position active par un dispositif de chargement (1168), qui comprend de préférence au moins un ressort (1168).

15. Barre de traction selon l'une des revendications 12 à 14,
**caractérisé en ce que le** recouvrement (1136) porte un ensemble fonctionnel (1180), tel qu'un composant de connecteur (1032) pour établir une connexion de ligne transmettant de l'énergie ou des signaux et/ou un composant d'alignement (1040) pour l'alignement spatial de l'ensemble fonctionnel (1180).
